# EUROPÄISCHE PATENTSCHRIFT

(11) **EP 0 787 632 B1**
(45) Veröffentlichungstag und Bekanntmachung des Hinweises auf die Patenterteilung: **19.12.2001**
(21) Anmeldenummer: 97100860.2
(22) Anmeldetag: 21.01.1997
(51) Int. Cl.: B60R 22/24

(54) **Umlenkbeschlag für einen Sicherheitsgurt**
Seat belt guide loop
Renvoi pour ceinture de sécurité

(30) Priorität: 30.01.1996 DE 29601566 U
(43) Veröffentlichungstag der Anmeldung: 06.08.1997
(73) Patentinhaber: TRW Occupant Restraint Systems GmbH & Co. KG, 73551 Alfdorf (DE)
(72) Erfinder: Möndel, Karl, 73529 Schwäbisch Gmünd (DE)
(74) Vertreter: Degwert, Hartmut, Dipl.-Phys.

(56) Entgegenhaltungen:
- EP-A- 0 212 668
- DE-A- 2 228 127
- DE-A- 3 022 178
- DE-A- 4 214 600
- DE-U- 7 813 861
- US-A- 5 207 452

## Beschreibung

Die Erfindung betrifft einen Umlenkbeschlag für einen Sicherheitsgurt, mit einem eine Öse aufweisenden Befestigungsabschnitt und einem Umlenksteg, der an seinen Enden durch je einen gekrümmten Verbindungsabschnitt mit dem Befestigungsabschnitt zu einem geschlossenen Ring verbunden ist, der einen Durchführungsschlitz für das Gurtband umgibt.

Ein solcher Umlenkbeschlag besteht üblicherweise aus einem gestanzten Stahlteil, das mit Kunststoff ummantelt ist. Das Stahlteil gewährleistet die notwendige Festigkeit des Umlenkbeschlages, während mittels der Ummantelung aus Kunststoff die gewünschte Oberflächenstruktur erzielt werden kann. Nachteilig bei einem solchen Umlenkbeschlag ist insbesondere das vergleichsweise hohe Gewicht.

Aus der DE-A1-22 28 127 ist ein einstückig ausgeführter ringförmiger Umlenkbeschlag aus einer Leichtmetallegierung bekannt.

Der Einsatz eines Gußverfahrens für einen Befestigungsbeschlag eines Sicherheitsgurtes aus einer Kupfer-Zink-Legierung ist in der DE-A1-42 14 600 dargelegt.

Um die Reibung eines Sicherheitsgurtes an einer Umlenkfläche zu vermindern, schlägt die DE-U1-78 13 861 vor, die Umlenkfläche mit punktförmigen Vertiefungen oder Rillen zu versehen.

Für den gleichen Zweck ist aus der DE-A1-30 22 178 bekannt, die Umlenkfläche mit Teflon zu beschichten.

Die US-A-5 207 452 zeigt einen Umlenkbeschlag aus einen zu einem Ring gebogenen Stahlstab, der an der gurtabgewandten Seite mit Rippen versehen ist, um die Verarbeitung zu erleichtern.

Aufgabe der Erfindung ist es, einen Umlenkbeschlag der eingangs genannten Art zu schaffen, dessen Gewicht im Vergleich zu herkömmlichen Umlenkbeschlägen vermindert ist, ohne daß es zu Einbußen hinsichtlich der Festigkeit und der Gestaltungsmöglichkeiten für die Oberflächenstruktur kommt.

Diese Aufgabe wird durch einen Umlenkbeschlag gelöst, der als massives Druckgußteil aus Aluminium oder einer Aluminiumlegierung ausgeführt ist. Die Erfindung beruht auf der Erkenntnis, daß unter der Annahme vergleichbarer Querschnitte ein aus Aluminium oder einer Aluminiumlegierung bestehender Umlenkbeschlag bei vermindertem Gewicht eine mindestens ebenso hohe Festigkeit bzw. Bruchlast aufweist wie ein Umlenkbeschlag aus einem mit Kunststoff ummantelten Stahlteil. Nachdem Aluminium oder eine Aluminiumlegierung ausreichend leicht zu bearbeiten ist, kommt es durch den Verzicht auf die Kunststoffummantelung auch zu keinen Einbußen hinsichtlich der Gestaltungsmöglichkeiten für die Oberflächenstruktur.

Gemäß einer bevorzugten Ausführungsform der Erfindung ist vorgesehen, daß unmittelbar an dem Umlenksteg eine Umlenkfläche für das Gurtband ausgebildet ist. Auf eine Kunststoffummantelung des Umlenksteges wird also verzichtet. Auf dieses Weise kann es auch bei extrem hohen Belastungen des Gurtbandes und damit des Umlenkbeschlages zu keinen scharfkantigen Verformungen kommen, die bei mit Kunststoff ummantelten Umlenkbeschlägen möglich sind und zu einem Reißen des stark gespannten Gurtbandes führen können.

Weiterhin kann bei einem erfindungsgemäßen Umlenkbeschlag vorgesehen sein, daß die Umlenkfläche des Umlenkbeschlages mit einer reibungsmindernden Oberflächenstruktur versehen ist. Dies vermindert die bei Benutzung des Sicherheitsgurtes auftretenden Kräfte im Sicherheitsgurt, so daß der Komfort für den Benutzer gesteigert wird.

Weiterhin kann bei einem erfindungsgemäßen Umlenkbeschlag vorgesehen sein, daß die Oberfläche des Umlenkbeschlages wenigstens teilweise eloxiert ist. Auf diese Weise kann der Umlenkbeschlag, falls gewünscht, durch Einfärben vielfältig farblich gestaltet werden.

Weitere vorteilhafte Ausgestaltungen eines erfindungsgemäßen Umlenkbeschlages sind in den Unteransprüchen angegeben.

Die Erfindung wird nachfolgend unter Bezugnahme auf eine Ausführungsform beschrieben, die in der beigefügten Zeichnnug dargestellt ist. In dieser zeigen:
- Fig. 1 schematisch eine Draufsicht auf einen erfindungsgemäßen Umlenkbeschlag;
- Fig. 2 vergrößert den Ausschnitt A aus Fig. 1; und
- Fig. 3. vergrößert einen Schnitt entlang der Linie III-III aus Fig. 1.

Der dargestellte Umlenkbeschlag 10 ist ein einstückiges Druckgußteil aus Aluminium oder einer Aluminiumlegierung. Er besteht aus einem Befestigungsabschnitt 12, in dem eine Öse 14 ausgebildet ist, in die eine (nicht dargestellte) Schraube einsetzbar ist, mit welcher der Umlenkbeschlag 10 beispielsweise an der B-Säule eines Fahrzeugs befestigt werden kann. Der Umlenkbeschlag 10 weist ferner einen Umlenksteg 16 auf, der über gekrümmte Verbindungsabschnitte 18 mit dem Befestigungsabschnitt 12 verbunden ist. Auf dem Umlenksteg 16 befindet sich eine Umlenkfläche 20, in der es zu einer Berührung zwischen dem Umlenkbeschlag 10 und einem (nicht dargestellten) umzulenkenden Sicherheitsgurt kommt.

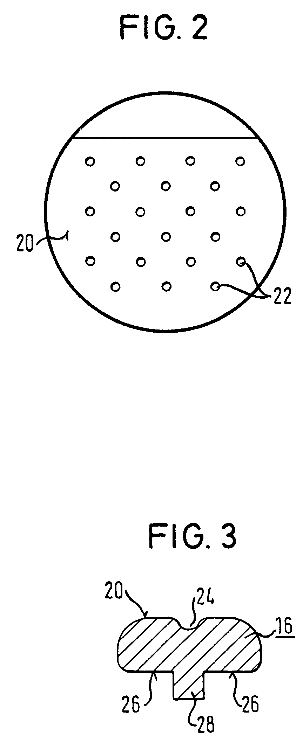

Wie dies von mit Kunststoff ummantelten Umlenkbeschlägen nach dem Stand der Technik bekannt ist, kann die Umlenkfläche des erfindungsgemäßen Umlenkbeschlages mit einer reibungsmindernden Oberflächenstruktur versehen sein. Ein Beispiel einer solchen reibungsmindernden Oberflächenstruktur ist in Fig. 2 dargestellt. In dieser Figur sind eine Vielzahl von Vertiefungen 22 zu sehen, die in der sonst glatten Umlenkfläche 20 ausgespart sind. Zusätzlich oder alternativ kann eine solche reibungsmindernde Oberflächenstruktur auch eine in Fig. 3 dargestellte Rille 24 enthalten, die quer zur Bewegungsrichtung des Sicherheitsgurtes über die Umlenkfläche verläuft. Die reibungsmindernde Oberflächenstruktur kann bereits bei der Herstellung des erfindungsgemäßen Umlenkbeschlages durch eine entsprechende Gestaltung der Gußform erzielt werden. Es ist auch möglich, die Umlenkfläche mit Teflon zu beschichten.

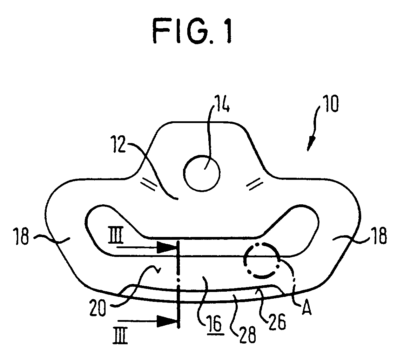

In den Figuren 1 und 3 ist weiterhin zu sehen, daß der Umlenksteg auf seiner von dem Befestigungsabschnitt abgewandten Seite außerhalb der Umlenkfläche 20 zwei sich in der Längsrichtung des Umlenksteges erstreckende Aussparungen 26 aufweist. Zwischen diesen Aussparungen bleibt eine in der Längsrichtung des Umlenksteges 16 verlaufende Rippe 28 stehen. Durch die Aussparungen kann eine deutliche Verminderung des Gewichts des Umlenkbeschlages 10 erzielt werden, ohne daß es zu einer merklichen Verringerung der Festigkeit kommt, da die im Bereich der Aussparungen von der Rippe 28 erhöhte Dicke des Umlenkbeschlages 10 sehr viel stärker in das Widerstandsmoment des Umlenksteges 16 eingeht als die in diesem Bereich durch die Aussparungen verminderte Breite.

Weiterhin kann vorgesehen sein, daß die Oberfläche des erfindungsgemäßen Umlenkbeschlages wenigstens teilweise eloxiert ist. Auf diese Weise kann die Oberfläche des erfindungemäßen Umlenkbeschlages, falls gewünscht, vielfältig eingefärbt werden.

## Patentansprüche

1. Umlenkbeschlag (10) für einen Sicherheitsgurt, mit einem eine Öse (14) aufweisenden Befestigungsabschnitt (12) und einem Umlenksteg (16), der an seinen Enden durch je einen gekrümmten Verbindungsabschnitt (18) mit dem Befestigungsabschnitt (12) zu einem geschlossenen Ring verbunden ist, der einen Durchführungsschlitz für das Gurtband umgibt, **dadurch gekennzeichnet, daß** er als massives Druckgußteil aus Aluminium oder einer Aluminiumlegierung ausgeführt ist.

2. Umlenkbeschlag nach Anspruch 1, **dadurch gekennzeichnet, daß** unmittelbar an dem Umlenksteg (16) eine Umlenkfläche (20) für das Gurtband ausgebildet ist.

3. Umlenkbeschlag nach Anspruch 2, **dadurch gekennzeichnet, daß** die Umlenkfläche (20) mit einer reibungsmindernden Oberflächenstruktur (22; 24) versehen ist.

4. Umlenkbeschlag nach Anspruch 3, **dadurch gekennzeichnet, daß** die Umlenkfläche (20) eine Vielzahl von Vertiefungen (22) aufweist, die in der sonst glatten Umlenkfläche (20) ausgespart sind.

5. Umlenkbeschlag nach einem der Ansprüche 3 und 4, **dadurch gekennzeichnet, daß** die Umlenkfläche (20) mindestens eine Rille (24) aufweist, die quer zur Bewegungsrichtung des Sicherheitsgurtes über die Umlenkfläche (20) verläuft.

6. Umlenkbeschlag nach einem der Ansprüche 2 bis 5, **dadurch gekennzeichnet, daß** seine Umlenkfläche (20) mit Teflon beschichtet ist.

7. Umlenkbeschlag nach einem der vorhergehenden Ansprüche, **dadurch gekennzeichnet, daß** seine Oberfläche eloxiert ist.

8. Umlenkbeschlag nach Anspruch 7, **dadurch gekennzeichnet, daß** die eloxierte Oberfläche eingefärbt ist.

9. Umlenkbeschlag nach einem der vorhergehenden Ansprüche, **dadurch gekennzeichnet, daß** der Umlenksteg (16) auf seiner von dem Befestigungsabschnitt (12) abgewandten Seite außerhalb der Umlenkfläche (20) mindestens eine sich in der Längsrichtung des Umlenksteges (16) erstreckende Aussparung (26) aufweist, so daß mindestes eine in der Längsrichtung des Umlenksteges (16) verlaufende Rippe (28) stehenbleibt.

## Claims

1. Deflection fitting (10) for a safety belt, with an attachment section (12) having an eyelet (14), and a deflection web (16) which is connected to the attachment section (12) by a bent connection section (18) at each of its ends to form a closed ring which surrounds a feed-through slot for the belt webbing, **characterised by** being produced as a solid diecast part made of aluminium or an aluminium alloy.

2. Deflection fitting in accordance with claim 1, **characterised by** a deflection surface (20) for the belt webbing being arranged directly at the deflection web (16).

3. Deflection fitting in accordance with claim 2, **characterised by** the deflection surface (20) being equipped with a friction-reducing surface structure (22; 24).

4. Deflection fitting in accordance with claim 3, **characterised by** the deflection surface (20) having a large number of indentations (22) recessed in the otherwise smooth deflection surface (20).

5. Deflection fitting in accordance with one of the claims 3 and 4, **characterised by** the deflection surface (20) having at least one groove (24) extending over the deflection surface (20) transversely to the direction of movement of the safety belt.

6. Deflection fitting in accordance with one of the claims 2 to 5, **characterised by** the deflection surface (20) being coated with Teflon.

7. Deflection fitting in accordance with one of the above claims, **characterised by** its surface being anodised.

8. Deflection fitting in accordance with claim 7, **characterised by** the anodised surface being coloured.

9. Deflection fitting in accordance with one of the preceding claims, **characterised by** the deflection web (16) having at least one recess (26) extending in the longitudinal direction of the deflection web (16) on the side facing away from the attachment section (12) and outside the deflection surface (20), whereby at least one rib (28) extending in the longitudinal direction of the deflection web (16) is formed.

## Revendications

1. Ferrure de renvoi (10) pour une ceinture de sécurité, avec une section de fixation (12), qui présente un oeillet (14), et une barrette de renvoi (16), qui est reliée à chacune de ses extrémités par une section de liaison recourbée (18) à la section de fixation (12) en formant une boucle fermée, qui entoure une fente servant au passage de la sangle de la ceinture, **caractérisée en ce qu'**elle est réalisée sous la forme d'une pièce en aluminium ou en un alliage d'aluminium, coulée sous pression.

2. Ferrure de renvoi selon la revendication 1, **caractérisée en ce qu'**une surface de renvoi (20) est constituée pour la sangle de la ceinture directement sur la barrette de renvoi (16).

3. Ferrure de renvoi selon la revendication 2, **caractérisée en ce que** la surface de renvoi (20) est pourvue d'une structure superficielle (22; 24) qui réduit le frottement.

4. Ferrure de renvoi selon la revendication 3, **caractérisée en ce que** la surface de renvoi (20) présente un certain nombre de renfoncements (22), qui sont ménagés dans la surface de renvoi (20), par ailleurs lisse.

5. Ferrure de renvoi selon l'une des revendications 3 et 4, **caractérisée en ce que** la surface de renvoi (20) présente au moins une rainure (24), qui s'étend perpendiculairement au sens du mouvement de la ceinture de sécurité sur la surface de renvoi (20).

6. Ferrure de renvoi selon l'une des revendications 2 à 5, **caractérisée en ce que** sa surface de renvoi (20) est garnie de Téflon.

7. Ferrure de renvoi selon l'une des revendications précédentes, **caractérisée en ce que** sa surface est anodisée.

8. Ferrure de renvoi selon la revendication 7, **caractérisée en ce que** la surface anodisée est teintée.

9. Ferrure de renvoi selon l'une des revendications précédentes, **caractérisée en ce que** la barrette de renvoi (16) présente, sur son côté situé à l'opposé de la section de fixation (12), en dehors de la surface de renvoi (20), au moins un évidement (26) qui s'étend dans le sens longitudinal de la barrette de renvoi (16), de telle sorte qu'au moins une nervure (28), qui s'étend dans le sens longitudinal de la barrette de renvoi (16), reste dressée.
